(19) Europäisches Patentamt
European Patent Office
Office européen des brevets

(11) EP 1 401 231 B1

(12) FASCICULE DE BREVET EUROPEEN

(45) Date de publication et mention
de la délivrance du brevet:
17.12.2014 Bulletin 2014/51

(51) Int Cl.:
H04Q 9/00 (2006.01)    G08C 19/00 (2006.01)

(21) Numéro de dépôt: 03103428.3

(22) Date de dépôt: 17.09.2003

(54) **Dispositif et procédé d'enregistrement de données environnementales**

Vorrichtung und Verfahren zur Aufnahme von Umweltdaten

Apparatus and method for recording environmental data

(84) Etats contractants désignés:
**AT BE BG CH CY CZ DE DK EE ES FI FR GB GR HU IE IT LI LU MC NL PT RO SE SI SK TR**

(30) Priorité: **19.09.2002 FR 0211609**

(43) Date de publication de la demande:
**24.03.2004 Bulletin 2004/13**

(73) Titulaire: **European Aeronautic Defence and Space Company**
**EADS France**
**75781 Paris Cedex 16 (FR)**

(72) Inventeurs:
• **Rouet, Vincent**
**75005 Paris (FR)**
• **Foucher, Bruno**
**92320 Chatillon (FR)**
• **De La Villeguerin, Alix**
**75008 Paris (FR)**

(74) Mandataire: **Ahner, Philippe et al**
**BREVALEX**
**95, rue d'Amsterdam**
**75378 Paris Cedex 8 (FR)**

(56) Documents cités:
**EP-A- 1 087 212    WO-A-01/14873**
**US-A- 4 745 564    US-A- 5 335 186**

**Description**

**DOMAINE TECHNIQUE**

La présente invention concerne un dispositif et un procédé d'enregistrement de données environnementales.

**ETAT DE LA TECHNIQUE ANTERIEURE**

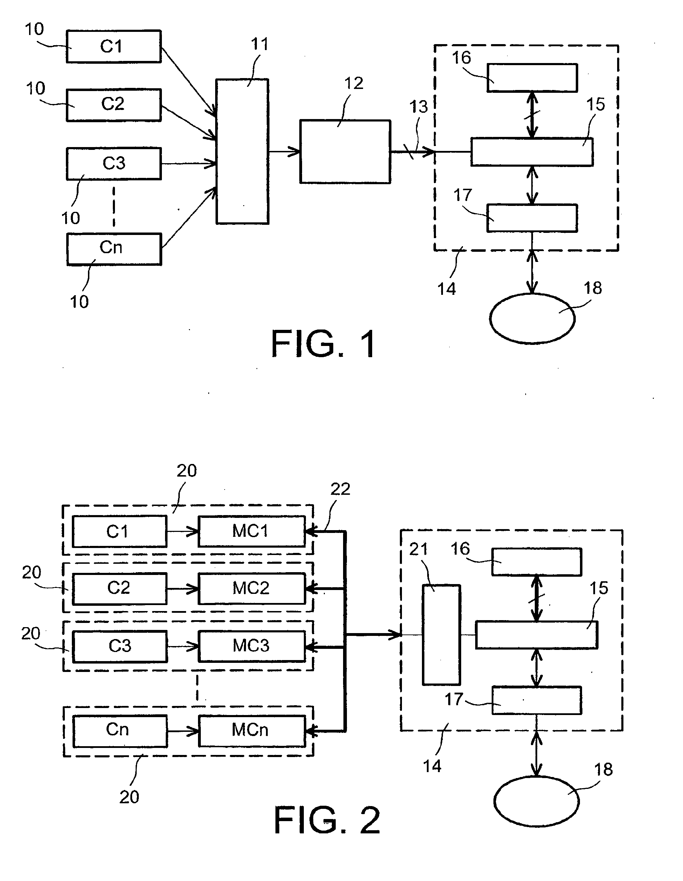

Un dispositif d'enregistrement de données environnementales de l'art connu, appelé TMSD ("Time Stress Measurement Device") est un dispositif électronique qui mesure des données environnementales ou factuelles (températures, humidité relative, intensité de lumière, état marche/arrêt, état ouvert/fermé, tension, pression, événement...) au cours du temps. Typiquement, un tel dispositif est alimenté par une batterie. Il est, comme illustré sur la figure 1, constitué de capteurs analogiques 10 (C1, C2, C3,...Cn), d'un multiplexeur 11, et d'un convertisseur analogique/numérique 12 connecté par un bus 13 à une unité centrale 14 formée d'un microcontrôleur 15, de mémoires 16, et d'un port série 17 ; un terminal 18 pouvant être relié à ce port série. Le microcontrôleur 15 gère les capteurs 10 (par exemple avec des valeurs de seuil), les entrées en provenance de ces capteurs (fréquences d'échantillonnage...), et les mémoires 16 (nombre et types d'enregistrements...).

L'objet d'un tel dispositif est de déterminer l'impact de l'environnement sur un système donné. Ce dispositif mesure les données environnementales d'une manière séquentielle ce qui permet d'obtenir un enregistrement de l'environnement.

Un dispositif du type TMSD est dédié à des utilisations spécifiques pour les raisons suivantes :

- un multiplexeur et un convertisseur analogique-numérique sont nécessaires comme interface entre chaque capteur et l'unité centrale,
- les capteurs sont spécialisés en fonction des contraintes des applications considérées (ainsi la fréquence d'échantillonnage, la précision et la gamme de mesures sont particulières pour chaque type de capteur).

Un document de l'art connu, le brevet US 5 600 576, décrit un tel dispositif TMSD. Ce dispositif récupère des conditions ambiantes relatives à un système électronique ou électromécanique, rassemble des données événementielles relatives à ce même système, horodate ces données, compare les conditions ambiantes à divers seuils préréglés, puis mémorise les conditions ambiantes et les données horodatées. Ces conditions ambiantes et ces données peuvent alors être recherchées par un opérateur pour mettre en évidence et analyser tout défaut ou échec du système. Ce dispositif peut alors envoyer un signal de test au système afin de déterminer si celui-ci fonctionne correctement.

De tels dispositifs TMSD sont des produits spécifiques étudiés pour des applications particulières telles que des applications de surveillance ayant des contraintes environnementales très différentes : transfert de marchandise, conteneurs, moteurs et structures de véhicules terrestres, d'appareils aériens, de bâtiments marins ou sous-marins...

Un autre document de l'art connu, le brevet US 5 335 186, décrit un système de capteurs intelligents et programmables et un procédé de détection de variables physiques. Une fois le capteur sur place, l'utilisateur peut le reprogrammer.

L'invention a pour objet de proposer un dispositif d'enregistrement de données environnementales générique, non dédié à une application précise, qui puisse s'adapter de manière simple et conviviale à n'importe quel type d'application.

**EXPOSÉ DE L'INVENTION**

L'invention concerne un dispositif générique d'enregistrement de données environnementales comprenant un ensemble de capteurs pour recueillir ces données, une unité centrale munie d'un microcontrôleur et de mémoires, chacun de ces capteurs étant associé à un microcontrôleur pour communiquer avec le microcontrôleur de l'unité centrale via un bus série commun,

caractérisé en ce que chaque microcontrôleur associé à un capteur comprend un logiciel en deux parties :

- une première partie propre au fonctionnement du capteur qui lui est associé, et qui permet la récupération d'une mesure ainsi que sa conversion numérique éventuelle,
- une seconde partie identique pour tous les microcontrôleurs, qui assure le transfert de la mesure sous forme numérique vers l'unité centrale en utilisant un protocole de communication série.

Dans ce dispositif, le nombre et le type de capteurs connectés sont illimités et permettent de constituer un véritable réseau.

D'autres périphériques, tels que GPS, GSM ..., peuvent être utilisés en tant que capteurs gérés par leur microcontrôleur.

Dans un exemple de réalisation, les capteurs sont trois accéléromètres selon trois axes perpendiculaires pour enregistrer les chocs et les vibrations, et un capteur de température pour analyser les cycles thermiques.

Avantageusement, le dispositif de l'invention n'est plus spécifique à un type d'environnement donné puisqu'il permet de choisir les ensemble capteurs convenant à l'environnement à étudier. Ainsi, il peut être utilisé dans de nombreuses applications de surveillance ayant des contraintes environnementales très différentes.

L'invention concerne également un procédé d'enregistrement de données environnementales utilisant le système selon l'une quelconque des revendications précédentes, dans lequel le microcontrôleur de l'unité centrale est maître de bus série commun et les microcontrôleurs sont esclaves, ledit procédé comprenant les étapes suivantes :

- interrogation d'un capteur par l'unité centrale, via son microcontrôleur associé,
- acquisition d'une donnée par ce capteur,
- envoi de cette grandeur à l'unité centrale selon un protocole de communication série.

Les avantages de l'invention sont notamment :

- une modularité de l'architecture,
- une interchangeabilité des capteurs,
- une capacité d'évolution, dans le choix des périphériques de l'unité centrale par exemple.

## BRÈVE DESCRIPTION DES DESSINS

La figure 1 illustre un dispositif d'enregistrement de données environnementales de l'art connu.
La figure 2 illustre un dispositif d'enregistrement de données environnementales selon l'invention.

## EXPOSÉ DÉTAILLÉ DE MODES DE RÉALISATION PARTICULIERS

De même que le dispositif d'enregistrement de données environnementales de l'art connu, illustré sur la figure 1, le dispositif de l'invention, illustré sur la figure 2, comprend :

- des capteurs 10 : C1, C2, C3... Cn,
- une unité centrale 14 muni d'un microcontrôleur 15, de mémoires 16, d'un port série 17,
- un terminal 18.

Par contre, le dispositif de l'invention comporte des ensembles capteurs 20 comprenant chacun un capteur Ci associé à un microcontrôleur Mci.

Les microcontrôleurs MC1, MC2, MC3...MCn sont reliés à un même port série 21 de l'unité centrale 14 via un bus série 22.

Ce port série 21 peut être intégré dans le microcontrôleur 15 de l'unité centrale.

Le dispositif de l'invention est donc tel qu'il existe une interface indépendante entre chacun des capteurs Ci et l'unité centrale 14. Cette interface, associée à chaque capteur Ci, comprend un microcontrôleur Mci qui communique avec le microcontrôleur 15 de l'unité centrale 14 via le bus série 22.

Une telle architecture présente notamment deux avantages :

- L'utilisation d'un bus série 22 ne nécessite qu'un ou deux fils électriques (selon le choix du protocole retenu), permettant la circulation des données sous forme numérique, et un fil de référence ou fil de masse.
- Chaque ensemble capteur 20 formé par un capteur Ci et par un microcontrôleur Mci peut être déporté par rapport à l'unité centrale 14, le risque de perturbation électrique de la grandeur analogique ainsi mesurée étant amoindri.

Les capteurs 10 de l'art connu sont ainsi devenus des ensembles capteurs intelligents 20, chacun d'eux étant piloté par un microcontrôleur Mci. Celui-ci récupère une donnée environnementale auprès du capteur Ci qui lui est associé, convertit cette donnée en format numérique, puis l'envoie au microcontrôleur 15 de l'unité centrale 14, grâce à un protocole de communication intelligible, qui la stocke en mémoire 16.

Les capteurs Ci peuvent également être des capteurs numériques : dans ce cas les microcontrôleurs correspondants ne réalisent pas de conversion en numérique. Ils sont adaptés alors pour recueillir les données, selon le protocole de communication propre à chaque capteur numérique, et les envoyer au microcontrôleur 15.

Le procédé de l'invention comprend donc les étapes suivantes :

- interrogation d'un capteur Ci par l'unité centrale 14 via son microcontrôleur MCi associé,
- acquisition d'une donnée par ce capteur Ci,
- traduction éventuelle de cette donnée en grandeur numérique, ou réception de la grandeur au format numérique par le microcontrôleur MCi associé,
- envoi de cette grandeur à l'unité centrale 14 selon un protocole de communication.

Le microcontrôleur 15 est maître du bus, et les microcontrôleurs Mci sont esclaves. Le microcontrôleur 15 pose les questions, les microcontrôleurs Mci répondent après acquisition des données requises.

L'avantage d'un tel procédé est de pouvoir disposer d'un seul et même protocole pour tous les ensembles capteurs 20 dans les échanges avec l'unité centrale 14, ce qui permet de rendre interchangeables les ensembles capteurs 20 les uns avec les autres.

Le logiciel contenu dans chaque microcontrôleur Mci est divisible en deux parties :

- la première est propre au fonctionnement du capteur considéré Ci : elle permet la récupération d'une mesure ainsi que sa conversion numérique éventuelle,
- la seconde est identique pour tous les microcontrôleurs Mci : Elle assure le transfert de la mesure sous forme numérique vers l'unité centrale 14 en utilisant un protocole de communication série.

Tous les ensembles capteurs 20 étant reliés au bus commun à liaison série 22, leur positionnement sur ce bus 22 est entièrement libre. Leur identification auprès de l'unité centrale 14 est garantie par un code numérique (utilisé comme adresse) unique pour chaque ensemble capteur 20.

Le protocole de communication sur le bus série 22 est un protocole standard. Ce peut être l'un des protocoles suivants :

- Protocole série synchrone

  • SPI
  • $I^2C$

- Protocole série asynchrone (SCI)

  • RS232
  • 1-wire bus system

Un bus série bien adapté à ce type d'application est celui utilisant le protocole $I^2C$, qui est utilisé dans le monde industriel grand public. Il est alors possible d'ajouter sur ce bus des périphériques autres que des capteurs, par exemple des mémoires, un module GPS pour récupérer une position,..., afin d'accroître les fonctionnalités du dispositif de l'invention.

Afin de quantifier l'adaptation au besoin du dispositif de l'invention, on a recours à un facteur de faisabilité ff qui tient compte de :

- la fréquence d'échantillonnage $fe_i$ de chaque capteur Ci (en octets/s),
- la fréquence $f_c$ de communication (en octets/s) sur le bus série 22

$$ff = \frac{f_c}{\Sigma fe_i} .$$

On doit avoir : ff > 1

Pour une liaison RS232 à 9600 bauds (1 bit de start, 8 bits de données et un bit de stop), un capteur de température de fréquence 10 Hz et un capteur de chocs à 100 Hz, on a :

$$fc = \frac{9600\,X\,8}{10} = 7680\;bit\,/\,s = \frac{7680}{8}\,octets\,/\,s = 960\,octets\,/\,s$$

$$\sum fci = (100 + 10)x8 = 880\;bits\,/\,s \quad \text{(pour une numérisation sur 8 bits)}$$

$$ff = \frac{960}{880} = 1.09 > 1.$$

Cette configuration peut donc être mise en place sans problème d'échantillonnage des données.

Dans un exemple de réalisation, on utilise comme capteurs Ci, trois accéléromètres selon trois axes perpendiculaires pour enregistrer les chocs et les vibrations, un capteur de température pour analyse les cycles thermiques.

Ces accéléromètres peuvent être des accéléromètres capacitifs du type Kistler 8356A2, et le capteur de température peut être un capteur du type LM35 de la société National Semiconductor.

On peut utiliser un microcontrôleur 15 du type Coldfire 5307 de la société Motorola travaillant à une fréquence de 80 MHz, des mémoires 16 SDRAM et FLASH, un bus série 22 de type RS232, un terminal 18 de type "Personal Computer", des microcontrôleurs $M_{ci}$ de type PIC de la société Microchip.

## Revendications

1.  Dispositif générique d'enregistrement de données environnementales pour mesurer l'impact de l'environnement sur un système donné, comprenant un ensemble de capteurs (C1, C2, C3,..., Cn) pour recueillir ces données, une unité centrale (14) munie d'un microcontrôleur (15) et de mémoires (16), chacun de ces capteurs (C1, C2, C3,..., Cn) étant associé à un microcontrôleur (MC1, MC2, MC3,..., MCn) pour communiquer avec le microcontrôleur (15) de l'unité centrale (14) via un bus série commun (22),
    **caractérisé en ce que** chaque microcontrôleur (MCi) associé à un capteur (Ci) comprend un logiciel en deux parties :

    - une première partie propre au fonctionnement du capteur (Ci) qui lui est associé, et qui permet la récupération d'une mesure ainsi que sa conversion numérique éventuelle,
    - une seconde partie identique pour tous les microcontrôleurs (MCi), qui assure le transfert de la mesure sous forme numérique vers l'unité centrale (14) en utilisant un protocole de communication série,
    et **en ce que** le dispositif comprend des moyens pour quantifier l'adaptation au besoin de celui-ci ayant recours à un facteur de faisabilité $ff = \dfrac{f_c}{\sum f_{ei}}$ avec fc fréquence de communication sur le bus série commun et fei fréquence d'échantillonnage de chaque capteur Ci, et vérifier que ce facteur de faisabilité est supérieur à 1.

2.  Dispositif selon la revendication 1, dans lequel l'unité centrale (14) est connectée à un terminal (18).

3.  Dispositif selon la revendication 1, dans lequel les capteurs constituent un réseau.

4.  Dispositif selon la revendication 1, dans lequel d'autres périphériques peuvent être utilisés en tant que capteurs gérés par leur microcontrôleur (MCi).

5.  Dispositif selon la revendication 1, dans lequel les capteurs ($C_i$) sont trois accéléromètres selon trois axes perpendiculaires pour enregistrer les chocs et les vibrations, et un capteur de température pour analyser les cycles thermiques.

6.  Procédé d'enregistrement de données environnementales utilisant le dispositif selon l'une quelconque des revendications précédentes, dans lequel le microcontrôleur (15) de l'unité centrale (14) est maître du bus série commun (22) et les microcontrôleurs (MCi) sont esclaves, ledit procédé comprenant les étapes suivantes :

- interrogation d'un capteur (Ci) par l'unité centrale, via son microcontrôleur (MCi) associé,
- acquisition d'une donnée par ce capteur (Ci),
- envoi de cette grandeur à l'unité centrale selon le protocole de communication série,
- quantification de l'adaptation au besoin de ce dispositif en ayant recours à un facteur de faisabilité

$$ff = \frac{f_c}{\sum f_{ei}}$$ avec fc fréquence de communication sur le bus série commun et fei fréquence d'échantillonnage de chaque capteur Ci et vérification que ce facteur de faisabilité est supérieur à 1.

**7.** Procédé selon la revendication 6, dans laquelle il y a traduction de la donnée acquise en grandeur numérique.

**8.** Procédé selon la revendication 6, dans laquelle la donnée acquise est reçue au format numérique par le microcontrôleur (MCi) associé.

## Patentansprüche

**1.** Allgemeine Vorrichtung zur Aufnahme von Umweltdaten, um die Wirkung der Umwelt auf ein gegebenes System zu messen, eine Gruppe von Sensoren (C1, C2, C3, ..., Cn) zum Sammeln dieser Daten, eine Zentraleinheit (14), ausgestattet mit einem Mikrocontroller (15), und Speichern (16) umfassend, wobei jeder dieser Sensoren (C1, C2, C3, ..., Cn) mit einem Mikrocontroller (MC1, MC2, MC3, ..., MCn) verbunden ist, um über einen gemeinsamen seriellen Bus (22) mit dem Mikrocontroller (15) der Zentraleinheit (14) zu kommunizieren, **dadurch gekennzeichnet, dass** jeder mit einem Sensor (Ci) verbundene Mikrocontroller (MCi) eine Software in zwei Teilen enthält:

- ein erster Teil gewährleistet den Betrieb des mit ihm verbundenen Sensors (Ci) und ermöglicht die Gewinnung eines Messergebnisses sowie seine eventuelle digitale Speicherung,
- ein für alle Mikrocontroller (MCi) identischer zweiter Teil gewährleistet den Transfer der Messung in digitaler Form zur Zentraleinheit (14) unter Benutzung eines seriellen Übertragungsprotokolls,

und dadurch, dass die Vorrichtung Einrichtungen umfasst, um die Anpassung an ihren Bedarf zu quantifizieren, zurückgreifend auf einen Durchführungs- bzw. Machbarkeitsfaktor $$ff = \frac{f_c}{\sum f_{ei}}$$ mit fc als Übertragungsfrequenz auf dem gemeinsamen seriellen Bus und fei als Abtastfrequenz jedes Sensors Ci, und zu verifizieren, dass dieser Machbarkeitsfaktor größer als 1 ist.

**2.** Vorrichtung nach Anspruch 1, bei der die Zentraleinheit (14) mit einem Terminal (18) verbunden ist.

**3.** Vorrichtung nach Anspruch 1, bei der die Sensoren ein Netz bilden.

**4.** Vorrichtung nach Anspruch 1, bei der andere Peripherien als Sensoren genutzt werden können, gesteuert durch ihren Mikrocontroller (MCi).

**5.** Vorrichtung nach Anspruch 1, bei der die Sensoren ($C_i$) Beschleunigungsmesser in drei zueinander senkrechten Achsen zum Aufzeichnen der Stöße und Schwingungen sowie ein Temperatursensor zum Analysieren der Temperaturzyklen sind.

**6.** Verfahren zur Aufnahme von Umweltdaten, die Vorrichtung nach einem der vorangehenden Ansprüche nutzend, bei dem der Mikrocontroller (15) der Zentraleinheit (14) Master des gemeinsamen seriellen Busses (22) ist, und die Mikrocontroller (MCi) Slaves sind, wobei das genannte Verfahren die folgenden Schritte umfasst :

- Abfragen eines Sensors (Ci) durch die Zentraleinheit über seinen zugeordneten Mikrocontroller (MCi),
- Erfassen einer Größe durch diesen Sensor (Ci),
- Senden dieser Größe zur Zentraleinheit gemäß dem seriellen Übertragungsprotokoll,

- Quantifizieren der Anpassung an den Bedarf dieser Vorrichtung, wobei zurückgegriffen wird auf einen Durch-

führungs- bzw. Machbarkeitsfaktor $ff = \dfrac{f_c}{\sum f_{ei}}$ mit *fc* als Übertragungsfrequenz auf dem gemeinsamen seriellen Bus und *fei* als Abtastfrequenz jedes Sensors Ci, und Verifizieren, dass dieser Machbarkeitsfaktor größer als 1 ist.

7. Verfahren nach Anspruch 6, bei dem die erfasste Größe in eine digitale Größe übersetzt wird.

8. Verfahren nach Anspruch 6, bei dem die erfasste Größe durch den zugeordneten Mikrokontroller (MCi) in digitaler Form empfangen wird.

**Claims**

1. A generic device for recording environmental data in order to measure the impact of the environment on a given system, comprising a set of sensors (C1, C2, C3,..., Cn) for collecting these data, a central unit (14) provided with a microcontroller (15) and with memories (16), each of these sensors (C1, C2, C3,..., Cn) being associated with a microcontroller (MC1, MC2, MC3,..., MCn) for communicating with the microcontroller (15) of the central unit (14) via a common series bus (22),
   **characterized in that** each microcontroller (MCi) associated with a sensor (Ci) comprises a software package in two portions:

   - a first portion specific to the operation of the sensor (Ci) which is associated with it, and which allows recovery of a measurement as well as its optional numerical conversion,
   - a second portion identical for all the microcontrollers (MCi) which ensures transfer of the measurement in digital form to the central unit (14) by using a series communication protocol,

   and **in that** the device comprises means for quantifying the adaptation to the need of the latter, resorting to a

   feasibility factor $ff = \dfrac{f_c}{\sum f_{ei}}$ with fc being the communication frequency on the common series bus and fei being the sampling frequency of each sensor Ci, and for checking that this feasibility factor is greater than 1.

2. The device according to claim 1, wherein the central unit (14) is connected to a terminal (18).

3. The device according to claim 1, wherein the sensors form a network.

4. The device according to claim 1, wherein other peripherals may be used as sensors managed by their microcontroller (MCi).

5. The device according to claim 1, wherein the sensors (Ci) are three accelerometers along three perpendicular axes for recording impacts and vibrations, and a temperature sensor for analyzing thermal cycles.

6. A method for recording environmental data using the device according to any of the preceding claims, wherein the microcontroller (15) of the central unit (14) is a master of the common series bus (22) and the microcontrollers (MCi) are slaves, said method comprising the following steps:

   - querying a sensor (Ci) with the central unit, via its associated microcontroller (MCi),
   - acquiring a datum with this sensor (Ci),
   - sending of this quantity to the central unit according to the series communication protocol,

   - quantifying the adaptation to the need of this device by resorting to a feasibility factor $ff = \dfrac{f_c}{\sum f_{ei}}$ with fc

   being the communication frequency on the common series bus and fei being the sampling frequency of each sensor Ci, and checking that this feasibility factor is greater than 1.

7. The method according to claim 6, wherein there is translation of the acquired datum into a digital quantity.

8. The method according to claim 6, wherein the acquired datum is received in digital format by the associated micro-controller (MCi).

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5600576 A
- US 5335186 A